# NEUE EUROPÄISCHE PATENTSCHRIFT

(11) **EP 0 662 564 B2**
(45) Veröffentlichungstag und Bekanntmachung des Hinweises auf die Entscheidung über den Einspruch: **26.09.2001**
(45) Hinweis auf die Patenterteilung: 14.01.1998
(21) Anmeldenummer: 95100041.3
(22) Anmeldetag: 03.01.1995
(51) Int. Cl.: F01N 7/14, F01N 7/08, F16L 39/00

(54) **Luftspaltisoliertes Abgasrohr und Verfahren zu seiner Herstellung**
Air gap insulation exhaust pipe and method of construction
Conduit de gaz d'échappement isolé par une couche d'air et méthode de construction

(30) Priorität: 07.01.1994 DE 4400313; 19.10.1994 DE 4437380
(43) Veröffentlichungstag der Anmeldung: 12.07.1995
(73) Patentinhaber: J. Eberspächer GmbH & Co., 73730 Esslingen (DE)
(72) Erfinder: Nording, Thomas, Dipl.-Ing., D-73734 Esslingen (DE); Utter, Alfred, Dipl.-Ing., D-66914 Waldmohr (DE)
(74) Vertreter: Klunker . Schmitt-Nilson . Hirsch

(56) Entgegenhaltungen:
- EP-A- 0 537 603
- EP-A- 0 695 901
- EP-B- 0 503 580
- EP-B- 0 508 145
- DE-A- 4 202 079
- DE-C- 4 019 899
- DE-U- 9 412 736
- US-A- 4 356 885
- US-A- 5 170 557
- US-A- 5 186 502

## Beschreibung

Die Erfindung betrifft ein Abgasrohr, das als luftspaltisoliertes doppelwandiges Rohr mit einem Außenrohr und einem Innenrohr ausgebildet ist, wobei zwei über einen Schiebesitz verbundene Innenrohrabschnitte vorgesehen sind und mindestens an einer Stelle zwischen den Enden des Abgasrohres eine Radiallagerung des Innenrohrs in dem Außenrohr vorgesehen sein kann, und das Abgasrohrauch einen ersten Schenkel, einen zweiten Schenkel und einen die beiden Schenkel verbindenden Bogen aufweisen kann.

Luftspaltisolierte, doppelwandige Abgasrohre finden insbesondere bei Abgasanlagen von Kraftfahrzeugen zunehmend Verwendung, in erster Linie für den Bereich zwischen dem Verbrennungsmotor bzw. dessen Abgaskrümmer, der die Abgase aus mehreren Zylindern zusammenführt, und einer Abgasentgiftungseinrichtung; diese weist normalerweise einen oder mehrere durchströmbare Abgasbehandlungskörper mit großer innerer Oberfläche auf, die mit einer katalytisch wirksamen Substanz beschichtet ist, wobei die Abgasbehandlungskörper in einem Blechgehäuse gehaltert sind. Luftspaltisolierte Abgasrohre bewirken eine Verringerung der Wärmeabgabe des Abgases an die Umgebung, so daß das Abgas mit höherer Temperatur als bei einfachwandigem Abgasrohr der Abgasentgiftungseinrichtung zuströmt. Dies ist insbesondere während der Warmlaufphase des Verbrennungsmotors von Bedeutung, weil der Abgasbehandlungskörper dann rasch seine Arbeitstemperatur erreicht. Außerdem kann man gut mit einem relativ dünnwandigen Innenrohr aus einem hochtemperaturfesten Material und einem Außenrohr größerer Wandstärke aus preiswerterem Material arbeiten.

Da das Innenrohr luftspaltisolierter Abgasrohre auf erheblich höhere Betriebstemperaturen kommt als das Außenrohr und häufig aus anderem Material als das AuBenrohr besteht, kommt es im Betrieb zu Wärmedehnungsunterschieden zwischen dem Innenrohr und dem Außenrohr. Je nach Länge des luftspaltisolierten Abgasrohres und Temperaturdifferenz zwischen Innenund Außenrohr entstehen im Betrieb Längenunterschiede zwischen dem Innenrohr und dem Außenrohr, die durchaus einige Millimeter betragen können. Derartige Längenunterschiede müssen aufgefangen werden, wobei es bisher gängig ist, einen Schiebesitz zwischen dem Innenrohr und dem Außenrohr an einem Ende des Abgasrohres vorzusehen. Wenn jedoch das Abgasrohr insbesondere einen Bogen aufweist, kann es bei dieser einfachen Konstruktion Probleme geben, weil sich das Innenrohr bei Erwärmung bereichsweise zu stark dem Außenrohr nähert, was die Gefahr der Geräuschbildung durch metallisches Anschlagen mit sich bringt.

Man hat bereits daran gedacht, das Innenrohr beidendig mit dem Außenrohr fest zu verbinden und irgendwo zwischen den Enden des Abgasrohres einen Schiebesitz zwischen zwei Innenrohrabschnitten vorzusehen. Derartige Abgasrohre waren jedoch bisher nicht wirtschaftlich herzustellen, wenn irgendwo zwischen den Enden des Abgasrohrs eine Radiallagerung des Innenrohrs in dem Außenrohr vorhanden sein soll, wie es insbesondere bei längeren oder gebogenen Abgasrohren vorteilhaft ist. In derartigen Fällen konnte man bisher nur so vorgehen, daß das doppelwandige, fertig gebogene Abgasrohr an einer Stelle quer durchtrennt wurde und dort nachträglich der Schiebesitz zwischen den beiden Innenrohrabschnitten und eine Radiallagerung des Innenrohrs in dem Außenrohr erzeugt wurden; danach wurde das Abgasrohr an der Trennstelle wieder zusammengeschweißt. Damit lagen der Schiebesitz und die Radiallagerung zwangsläufig praktisch an derselben Stelle der Länge des Abgasrohres. Die geschilderte Herstellungsweise ist umständlich und teuer.

Der Erfindung liegt die Aufgabe zugrunde, ein luftspaltisoliertes Abgasrohr der eingangs genannten Art zu schaffen, bei dem mit Hilfe einfacher Mittel sowohl die Wärmedehnungsunterschiede zwischen dem Innenrohr und dem Außenrohr aufgefangen werden als auch Geräuschentstehung durch Anschlagen des Innenrohrs am Außenrohr sicher vermieden ist

Gelöst wird die der Erfindung zugrundeliegende Aufgabe dadurch, daß der Schiebesitz an einer ersten Stelle vorgesehen ist, die sich in dem ersten Schenkel befindet, und daß eine Radiallagerung des Innenrohrs an einer zweiten Stelle vorgesehen ist, die im Bogen oder im zweiten Schenkel so nahe an dem Bogen positioniert ist, daß bei Wärmedelmungsunterschieden Zwischen dem Innenrohr und dem Außenrohr ein Arbeiten des Schiebesitzes erzwungen wird.

Anders als bei bisheriger Technologie hat man somit eine deutliche Distanz zwischen dem Schiebesitz (erste Stelle) und der Radiallagerung (zweite Stelle). Schiebesitze setzen der Relatiwerschiebung der beiden Schiebesitzpartner einen gewissen Widerstand entgegen; erfindungsgemäß befindet sich die Radiallagerung des Innenrohrs im Außenrohran einer Stelle, die ein Ausweichen des Innenrohrs ohne Relativbewegung im Schiebesitz verhindert, sondern ein "Arbeiten" des Schiebesitzes erzwingt. Wenn die beiden Schenkel des Abgasrohres unterschiedlich lang sind, ist es günstiger die Schiebesitzstelle im längeren der beiden Schenkel vorzusehen.

Es wird darauf hingewiesen, daß das erfindungsgemäße Abgasrohr in der Regel nur als Teilabschnitt des gesamten Abgasstrangs vorgesehen ist; insofern könnte man auch von einem Abgasrohrabschnitt sprechen. Ferner wird darauf hingewiesen, daß das Innenrohr fest mit dem Außenrohr verbunden ist, wiewohl es möglich und fallweise sogar günstig ist, mindestens an einem Ende des Abgasrohres einen Schiebesitz des Innenrohres relativ zum Außenrohr vorzusehen. Auch wird darauf hingewiesen, daß die Erfindung auch bei einem Abgaskrümmer od. dgl. realisierbar ist, der gegebenenfalls in Schalenkonstruktion ausgeführt ist.

In einer Ausführungsform befindet sich die Radiallagerungsstelle in der dem zweiten Schenkel benachbarten Hälfte des Bogens oder im zweiten Schenkel in der Nähe des Bogens. Bei dieser Anordnung wird am effektivsten verhindert, daß sich das Innenrohr ohne "Arbeiten" des Schiebesitzes als Einheit dehnt und die Längendifferenz gegenüber dem Außenrohr zu einer unangemessenen Verkleinerung des Spalts zwischen dem Innenrohr und dem Außenrohr auf der Außenseite des Innenrohrbogens führt.

Das erfindungsgemäße Abgasrohr ist nicht darauf beschränkt, nur den einen beschriebenen Bogen aufzuweisen. Vielmehr kann im Verlauf des ersten Schenkels und/oder des zweiten Schenkels mindestens ein weiterer Bogen vorhanden sein. Wenn dies der Fall ist, beziehen sich die vorstehenden Ausführungen vorzugsweise auf denjenigen Bogen des Abgasrohres, der die stärkste Richtungsänderung besitzt.

Eine erste, in Weiterbildung der Erfindung bevorzugte Möglichkeit der Ausführung der Radiallagerung ist mittels Drahtgestrick. Drahtgestrick hat den Vorteil, gegebenenfalls mit Vorspannung eine hinreichend große Haltekraft auf das Innenrohr aufzubringen und radiale Wärmedehnungsunterschiede zwischen dem Innenrohr und dem Außenrohr elastisch aufzufangen. Die einfachste Möglichkeit ist ein umlaufender Drahtgestrickring zwischen dem Innenrohr und dem Außenrohr.

In Weiterbildung der Erfindung ist es jedoch bevorzugt, statt eines umlaufenden Drahtgestrickrings mehrere, umfangsmäßig beabstandete Drahtgestrickelemente vorzusehen. Je nach Geometrie des Verlaufs des Abgasrohres und nach Lage der zweiten Stelle ermöglicht dies eine einfachere Herstellung des Abgasrohres, wie weiter unten noch deutlicher werden wird.

Das Drahtgestrick, sei es z.B. ein Drahtgestrickring oder umfangsmäßig beabstandete Drahtgestrickelemente, kann am Außenrohr und/oder am Innenrohr befestigt sein, insbesondere mittels Schweißung. Die Befestigung des Drahtgestricks am Innenrohr oder am Außenrohr kann bei der Herstellung vor dem Zusammenstecken und Biegen der Rohre vorgenommen sein, kann aber auch erst nach dem Zusammenstecken und Biegen vorgenommen sein, insbesondere im Fall eines nachträglich eingeschobenen Drahtgestricks als Radiallagerung. Alternativ oder zusätzlich ist es möglich, das Drahtgestrick in Axialrichtung im Außenrohr festzulegen, wiederum vor oder nach dem Zusammenstecken und Biegen, und zwar vorzugsweise zwischen zwei axial beabstandeten Sicken des Außenrohres.

Eine zweite, in Weiterbildung der Erfindung bevorzugte Möglichkeit der Ausbildung der Radiallagerung besteht darin, daß diese mittels mehrerer, nach innen gehender, umfangsmäßig beabstandeter Einprägungen des Außenrohres gebildet ist. Diese Einprägungen lassen sich besonders rationell und nach dem Zusammenstecken und Biegen vomehmen. Die Einprägungen sollen am besten so weit nach innen gehen, daß das Innenrohr bereits im kalten Zustand von innen gegen die Einprägungen anliegt, damit auch im kalten Zustand dort keine Geräusche entstehen.

In bevorzugter Weiterbildung der Erfindung sind die Einprägungen umfangsmäßig so weit beabstandet, daß an der zweiten Stelle am Innenrohr Umfangsabschnitte ausreichender Länge frei für elastische Auswöbung bei Temperaturerhöhung sind. Das Material des Innenrohrs hat bei Betriebstemperatur eine deutlich geringere Festigkeit als im kalten Zustand. Deshalb ist es bevorzugt, daß die Einprägungen nicht nur punktweise Kontakt mit dem Innenrohr haben, sondern über eine Umfangslänge von mindestens 30°. In den beschriebenen Umfangsabschnitten zwischen dem Kontakt mit den Einprägungen hat das Innenrohr Gelegenheit, sich bei Temperaturerhöhung elastisch auszuwölben, ohne daß es zu einer plastischen Verformung mit der Gefahr eines danach lockeren Sitzes im Außenrohr kommt.

In Weiterbildung der Erfindung gibt es die Möglichkeit, die beiden Innenrohrabschnitte aus unterschiedlichen Materialien und/oder mit unterschiedlicher Wandstärke herzustellen. Da die Beanspruchungen des Innenrohrs über die Länge des Abgasrohres gesehen je nach Geometrie des Rohrverlaufs unterschiedlich sein können, kann es günstig sein, einen besonders hochwertigen Werkstoff und/oder eine größere Wandstärke nur dort vorzusehen, wo dies wirklich benötigt wird.

Insgesamt gesehen werden für das Innenrohr in der Regel austenitische, hochwarmfeste Stähle und für das Außenrohr preisgünstigere, ferritische Stähle eingesetzt.

Das Abgasrohr ist nach den Verfahren gemäß Anspruch 16 oder 17 herstellbar.

Als inkompressibles Medium wird vorzugsweise Stahlsand verwendet.

Bei beiden vorgenannten Verfahren wird vorzugsweise, wie beschrieben, die Radiallagerung durch Drahtgestrick, sei es als Drahtgestrickring oder als umfangsmäßig beabstandete Drahtgestrickelemente, oder mittels nach innen gehender Einprägungen des Außenrohrs erzeugt. Je nach Lage der zweiten Stelle im Abgasrohr gibt es jedoch Rohrverläufe, bei denen Drahtgestrick nach dem Biegen der Doppelrohranordnung nicht oder nur schwierig nachträglich eingeschoben werden kann. Im Fall der Radiallagerung mittels Einprägungen ist es häufig rationeller, die Radiallagerung nach dem Biegen der Doppelrohranordnung zu erzeugen.

Eine Radiallagerung mittels Einprägungen hat ferner den Vorteil, daß man eine etwaige Exzentrizität zwischen Innenrohr und Außenrohr, wie sie durch Herstellungstoleranzen des Innenrohrs und des Außenrohrs sowie durch den Biegevorgang gegeben sein kann, durch die Einprägungen korrigieren kann. Es ist aber auch möglich, die Einprägungen über den Umfang gezielt unterschiedlich tief auszubilden und auf diese Weise eine gezielte Exzentrizität herbeizuführen, insbesondere um in einer bestimmten Radialrichtung der Radiallagerung mehr Abstand zwischen dem Innenrohr und dem Außenrohr zu schaffen. Für temperaturbedingte Verlagerungen des Innenrohrs neben der Radiallagerungssteile wird hierdurch in einer bestimmten Richtung mehr Freiraum geschaffen.

Es wird betont, daß das erfindungsgemäße Abgasrohr zusätzlich zu der beschriebenen Radiallagerung an der beschriebenen zweiten Stelle noch eine oder gar mehrere weitere Radiallagerungen des Innenrohres im Außenrohr aufweisen kann.

Die erste Schiebesitzvariante betrifft insbesondere die Verwendung einer Distanzhülse bei der Montage des Innenrohres bzw. bei einem Zusammenstecken der Innenrohrabschnitte, wobei die Distanzhülse insbesondere in den aufkalibrierten, den Fügespalt ausbildenden Endbereich des einen Innenrohrabschnitts bis zu einem definierten ersten Axialendanschlag eingesteckt wird, worauf der andere Innenrohrabschnitt seinerseits in die Distanzhülse bis zu einem zweiten definierten Axialendanschlag der Distanzhülse eingeführt wird. Nach Montage des Schiebesitzes wird das gesamte Innenrohr im Außenrohr (oder in einer ein- oder mehrteiligen Schale) angeordnet, wobei die Distanzhülse radial nach außen stehende Zentriemocken besitzen kann, welche die Distanzhülse einschließlich Innenrohrbereich der Distanzhülse im Außenrohr zentrieren, um so einen exakten einfachen Sitz des Innenrohrs einzurichten, bevor dieses an anderer Axialstelle im Außenrohr endmontiert wird.

Die Distanzhülse ist aus einem verbrennbaren Material wie Polyethylen oder Polystyrol ausgebildet, welches eine niedrigere Verbrennnungstemperatur als die Abgastemperatur eines Verbrennungsmotors oder dergleichen hat Wird somit das endmontierte Abgasrohr erstmalig in Betrieb genommen, verbrennt die Distanzhülse rückstandsfrei und gibt dadurch den exakten zuvor durch die Distanzhülse eingestellten Schiebesitz frei. Findet somit Sand (oder ein anderes Befüllmedium) für ein Biegen eines krummen Abgasrohres Verwendung, kann dieser Sand nicht in den Fügespalt der Innenrohrabschnitte gelangen, da dieser durch die Distanzhülse so lange belegt ist, bis auch der Sand wieder entfernt wird. Eine Verschmutzung des Schiebesitzbereiches durch Befüllmedium ist also keinesfalls möglich.

Die Distanzhülse sorgt für eine Zwangspositionierung der Innenrohrabschnitte im Außenrohr im Montagezustand. Mit Einsatz einer Distanzhülse werden beide Innenrohrabschnitte im Einsteckbereich gemeinsam kalibriert.

Durch Verwendung vorgenannter Distanzhülse werden nicht nur Einstecktiefe und Schiebeweg definiert und eine Zwangspositionierung eingerichtet, sondem es ist insbesondere eine Toleranzeinengung um mindestens 50 % im Spaltmaß gegenüber Einzelbearbeitung der beiden Teile möglich. Insbesondere kann das Spaltmaß zwischen Rohr und Muffe bzw. zwischen den Innenrohrabschnitten im Einsteckbereich bezüglich Durchmesser und Abwicklungstoleranz durch gemeinsames Kalibrieren eingeengt werden. Durch die Zentriemocken der Distanzhülse ist Konzentrizität von gasführendem Innenrohr zum Außenrohr in der Montagephase gewährleistet.

Die zweite Schiebesitzvariante betrifft ein besonderes Kalibrierverfahren des Umfangs der Innenrohrabschnitte im Endbereich der Steck- und Schiebeverbindung. Insbesondere werden die beiden Endbereiche einzeln mit einer sogenannten Polygonkalibrierung versehen, und zwar durch besondere Kalibrierdorne oder Kalibrier-Spreizsegmente, die (in Stirnansicht des Innenrohrs) ein Viel- oder Mehreck durch Abflachungen des zuvor runden Durchmessers schaffen, wobei auf dem Umfang weiter Rundstellen zwischen den Abflachungen verbleiben. Die Abflachungen, vorzugsweise drei pro Innenrohrabschnitt, sind insbesondere auf dem Umfang gleich verteilt.

Die einzeln polygonkalibrierten Innenrohrabschnitte werden nun nach einem Zusammenstecken umfangsmäßig zueinander verdreht, bis Axiallinienberührung zwischen den Teilen gegeben ist. Die Umfangsverdrehung entspricht vorzugsweise der halben Polygonteilung.

Es wird mithin erfindungsgemäß eine bestimmte Formgebung der Innenrohrabschnitte geschaffen, welche durch mindestens drei Axiallinienberührungen zwischen den Teilen eine Relativbewegung der beiden Rohrenden der Steckverbindung in radialer Richtung verhindert, jedoch in axialer Richtung ein Verschieben der Teile nach wie vor zuläßt, so daß im Fahrbetrieb keine Klappergeräusche auftreten können, auch nicht bei einem Kaltstart eines Fahrzeuges. Die beiden Rohre sind in ihrer Lage zueinander trotz erforderlichem Spalt fixiert. Die Abwicklungen der beiden Rohrenden sind so dimensioniert, daß auch unterschiedliche radiale Wärmedehnungen z.B. beim Einsatz verschiedener Materialien kompensiert werden können, ohne zum Blockieren des Schiebesitzes zu führen. Durch die Erfindung wird mithin eine "gezielte Unrundheit" eingerichtet, um auf einfach Weise Klappergeräusche zu verhindem, obgleich keine übergroßen Anforderungen an die Fertigungstoleranz der Einzelteile gestellt werden müssen.

Die Erfindung wird nachfolgend anhand von Ausführungsbeispielen unter Bezugnahme auf die beigefügte Zeichnung näher erläutert; es zeigen:
- Fig. 1: eine teilweise aufgeschnitte Ansicht eines doppelwandigen Abgasrohrs,
- Fig. 2: einen Querschnitt des Abgasrohrs der Fig. 1 gemäß Schnittangabe ll-ll,
- Fig. 3: eine teilweise aufgeschnitte Teil-Ansicht einer abgeänderten Ausführungsform des Abgasrohrs gemäß Fig. 1,
- Fig. 4: einen Querschnitt des Abgasrohrs der Fig. 3 gemäß Schnittangabe IV-IV,
- Fig. 5: einen Schnitt ähnlich Fig. 1 im Bereich eines Schiebesitzes in besonderer Ausgestaltung,
- Fig. 6: eine Stirnansicht der Fig. 5 unter Weglassung des Außenrohres,
- Fig. 7: einen Querschnitt der Fig. 6 gemäß Schnittangabe I-I.
- Fig. 8: eine Stimansicht im Fügezustand eines anderen Schiebesitzes ähnlich Fig. 6,
- Fig. 9: einen Querschnitt der Fig. 8 gemäß Schnittangabe III-III,
- Fig. 10: eine Stirnansicht des Schiebesitzes der Fig. 8 nach einem Verdrehen bzw. im Montagezustand, und
- Fig. 11: einen Querschnitt der Fig. 10 gemäß Schnittangabe V-V ähnlich Fig. 9.

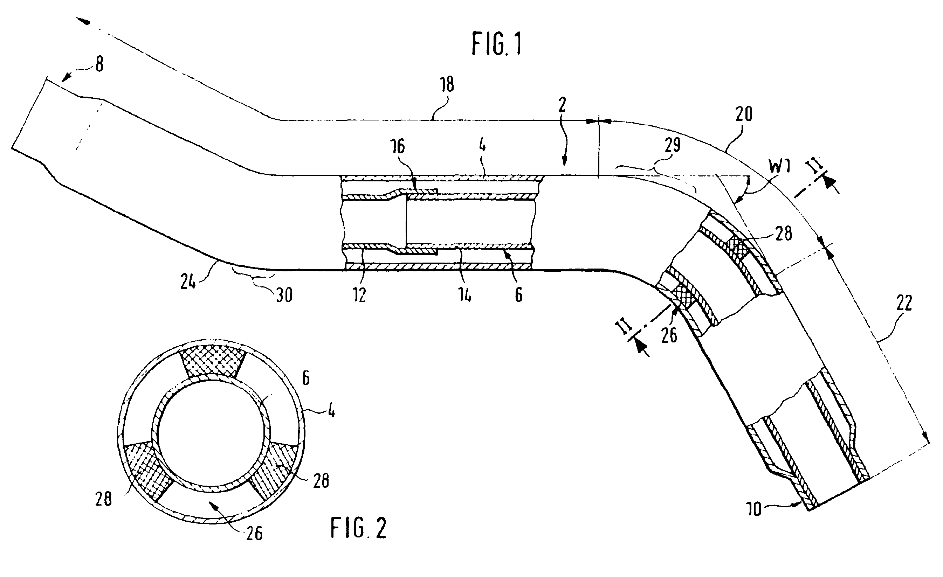

Das in Fig. 1 dargestellte Abgasrohr 2 weist als Hauptbestandteile ein Außenrohr 4 und ein im wesentlichen hierzu konzentrisches Innenrohr 6 auf. An beiden Enden 8, 10 des Abgasrohres 2 ist das Außenrohr 4 so weit in seinem Durzhmesser verkleinert, daß es an dem Innenrohr 6 anliegt, wie in Fig. 1 rechts unten erkennbar. An den beiden Enden 8, 10 sind das Außenrohr 4 und das Innenrohr 6 z.B. durch Schweißung fest miteinander verbunden.

Das Innenrohr besteht aus einem ersten Innenrohrabschnitt 12 und einem zweiten Innenrohrabschnitt 14, die an einer weiter unten noch genauer zu beschreibenden, ersten Stelle über einen Schiebesitz 16 miteinander verbunden sind. Zur Ausbildung des Schiebesitzes 16 ist einer der beiden Innenrohrabschnitte 12, 14 in seinem dortigen Endbereich so weit in seinem Durchmesser aufgeweitet, daß der dortige Endbereich des anderen Innenrohrabschnitts mit relativ engem, klapperfreiem Sitz, der jedoch eine axiale Relativverschiebung der beiden Innenrohrabschnitte im Schiebesitz 16 zuläßt, hineinpaßt. Weitere Einzelheiten zu Ausführungsvarianten des Schiebesitzes werden noch weiter unten beschrieben.

Hinsichtlich des geometrischen Verlaufs besteht das Abgasrohr 2 aus einem ersten Schenkel 18, einem an den ersten Schenkel 18 anschließenden Bogen 20, und einem an den Bogen 20 anschliessenden, zweiten Schenkel 22. Der erste Schenkel 18 hat eine erheblich größere Länge als der zweite Schenkel 22. Durch den Bogen 20 hat das Abgasrohr 2 dort eine relativ starke Richtungsänderung, die beim dargestellten Ausführungsbeispiel etwa 70° beträgt (Winkel W1). Die Zeichnungsebene der Fig. 1 ist so gelegt, daß die Längsmittelachse des zweiten Schenkels 22, die gekrümmte Längsmittelachse des Bogens 20 und die Längsmittelachse eines an den Bogen 20 anschließenden Teilbereichs des ersten Schenkels 18 in der Zeichnungsebene liegen.

Der erste Schenkel 18 ist nicht durchgehend geradlinig, sondern weist einen weiteren Bogen 24 auf, der eine sehr viel kleinere Richtungsänderung als der weiter vorn beschriebene Bogen 20 definiert. Die gekrümmte Längsmittelachse des weiteren Bogens 24 kann, muß aber nicht, in der Zeichnungsebene der Fig. 1 liegen, so daß der zwischen dem weiteren Bogen 24 und dem Abgasrohrende 8 befindliche Teilbereich des ersten Schenkels 18 in der Zeichnungsebene liegen oder aus der Zeichnungsebene nach hinten oder nach vorn herausführen kann.

An einer zweiten Stelle, die sich in dem Bogen 20, aber ziemlich nahe dem dem zweiten Schenkel 22 zugewandten Bogenende, befindet, ist eine Radiallagerung 26 des Innenrohrs 6 in dem Außenrohr 4 vorgesehen. Beim in den Fig. 1 und 2 dargestellten Ausführungsbeispiel besteht die Radiallagerung 26 aus drei umfangsmäßig verteilten, voneinander beabstandeten Drahtgestrickelementen 28. Die Drahtgestrickelemente 28 haben beim dargestellten Ausführungsbeispiel jeweils eine Umfangslänge von 30°. Es könnte auch eine andere Anzahl der Drahtgestrickelemente oderauch ein umlaufender Drahtgestrickring vorgesehen sein.

Die Position des Schiebesitzes 16 im ersten Schenkel 18 ist unkritisch. Meistens wird man den Schiebesitz - grob gesprochen - im mittleren Bereich der Länge des ersten Schenkels 18 vorsehen.

Wenn das dargestellte, luftspaltisolierte, doppelwandige Abgasrohr 2 durch sein Innenrohr 6 von heißem Abgas durchströmt wird, erfährt das Innenrohr 6 eine größere Längendehnung als das Außenrohr 4, wobei ein erheblich größerer Teil des Längendehnungsunterschieds auf den ersten Schenkel 18 entfällt. Dort wird der Längendehnungsunterschied durch den Schiebesitz 16 aufgenommen, d.h. dort schieben sich die beiden Innenrohrabschnitte 12, 14 ein Stück weiter zusammen. Der Schiebesitz 16 läßt sich nicht widerstandsfrei weiter zusammenschieben. Durch die Radiallagerung 26 an der beschriebenen zweiten Stelle ist jedoch sichergestellt, daß der Schiebesitz 16 bei Temperaturerhöhung des Innenrohrs 6 tatsächlich sich zusammenschiebend "arbeitet" und das Innenrohr 6 nicht einfach durch örtliche Verlagerung mehr zur Außenseite des Bogens 20 hin ausweicht, weil die Radiallagerung 26 gezielt gerade diese Ausweichbewegung der aus dem ersten Schenkel 18 kommenden Längenänderung verhindert. Im zweiten Schenkel 22 entsteht selbstverständlich ebenfalls eine Längendehungsdifferenz zwischen dem Außenrohr 4 und dem Innenrohr 6, die jedoch wegen der kürzeren Länge des zweiten Schenkels 22 im Vergleich zum ersten Schenkel 18 kleiner ist. Diese Längendehnungsdifferenz wird dadurch aufgenommen, daß sich das Innenrohr 6 etwa im Bereich 29 der Außenseite des Bogens 20 etwas dem Außenrohr 4 annähert. Der Ringspalt zwischen dem Außenrohr 4 und dem Innenrohr 6 ist groß genug, die dortige Verlagerung aufzufangen. Etwas Analoges spielt sich etwa im Bereich 30 der Außenseite des weiteren Bogens 24 ab als Auswirkung des Längendehnungsunterschiedes zwischen dem Innenrohr 6 und dem Außenrohr 4 in dem dem Abgasrohrende 8 benachbarten Teilbereich des ersten Schenkels 18. Selbst wenn dieser Teilbereich eine beträchtliche Länge hat, sind hier die Auswirkungen weniger ausgeprägt, weil der weitere Bogen 24 eine kleinere Richtungsänderung definiert als der Bogen 20.

Die Radiallagerung 26 kann auch weiter nach links hinein in den Bogen 20, sogar über dessen Scheitelpunkt hinaus, verlagert sein oder könnte auch im zweiten Schenkel 22 positioniert sein, am besten allerdings nicht weit vom Bogen 20 entfernt.

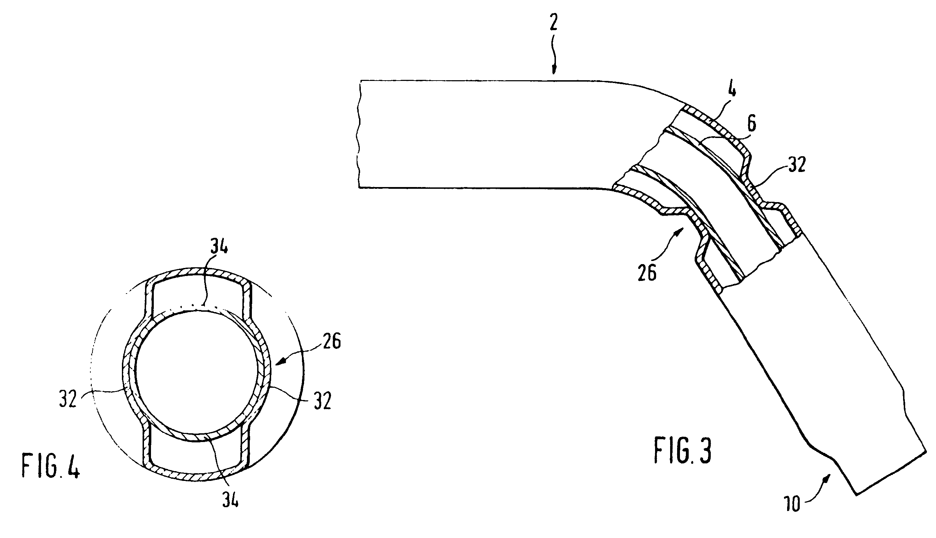

In den Figuren 3 und 4 ist eine abgewandelte Ausführungsform der Radiallagerung 26 veranschaulicht, wobei nur die Unterschiede zu der beschriebenen ersten Ausführungsform beschrieben werden. Statt der Drahtgestrickelemente 28 sind über den Umfang dos Abgasrohres 2 verteilt mehrere beabstandete Einprägungen 32 des Außenrohrs 4 vorgenommen. Die Einprägungen 32 gehen so weit nach innen, daß im kalten Zustand des Abgasrohres klapperfreier Lagerungskontakt zwischen dem Innenrohr 6 und dem Außenrohr 4 besteht. Beim gezeichneten Ausführungsbeispiel beträgt die in Kontakt mit dem Innenrohr 6 befindliche Umfangslänge der Einprägungen etwa 90°; es sind zwei diametral gegenüberliegende Einprägungen 32 vorgesehen. Man könnte auch mit einer größeren, über den Umfang verteilten Anzahl von in Umfangsrichtung beabstandeten Einprägungen 32 arbeiten. Es ist jedoch bevorzugt, zwischen den in Kontakt mit dem Innenrohr 6 befindlichen Einprägungen 32 freie Umfangsabschnitte 34 des Innenrohrs 6 zu haben, die in Umfangsrichtung lang genug sind, um dort eine elastische Auswölbung des Innenrohrs 6 bei Temperaturerhöhung zu erlauben. Hierdurch ist verhindert, daß sich das Innenrohr 6 bei Temperaturerhöhung in der Radiallagerung 26 plastisch verformt. Dortige plastische Verformung hätte zur Folge, daß das Innenrohr 6 bei der nächsten Abkühlung nicht mehr straff in der Radiallagerung 26 sitzt.

Es wird darauf hingewiesen, daß das beschriebene Abgasrohr durchaus noch weitere Bögen aufweisen kann, z.B. einen weiteren Bogen sogar relativ starker Richtungsänderung im ersten Schenkel 18 ziemlich nahe an dem Ende 8. Wenn die Rohrlänge zwischen diesem weiteren Bogen und dem Ende 8 nicht zu groß ist, bewirkt die Befestigung des Innenrohrs 6 und des Außenrohrs 4 aneinander im Bereich des Endes 8 eine die beschriebenen, unerwünschten Ausweichbewegungen des Innenrohres 6 verhindernde Festlegung. Insbesondere wenn der weitere Bogen eine starke Richtungsänderung definiert und zugleich die Rohrlänge zwischen diesem weiteren Bogen und dem Ende 8 beträchtlich ist, kann man im dortigen Bereich eine weitere Radiallagerung 26 analog der beschriebenen Radiallagerung 26 vomehmen.

Die bislang beschriebenen Abgasrohre 2 lassen sich so herstellen, daß man das bereits mit dem Schiebesitz 16 versehene Innenrohr 6 in das Außenrohr 4 einsteckt und an einem der beiden Enden 8, 10 die feste Verbindung zwischen dem Innenrohr 6 und dem Außenrohr 4 herstellt. Dann wird z.B. Sand in den Ringspaltraum zwischen dem Innenrohr 6 und dem Außenrohr 4 auf die gesamte Länge eingebracht. Dann läßt sich diese Doppelrohranordnung zur Herstellung aller gewünschten Bögen 20, 24, usw. mit gängiger, einfacher Technologie biegen. Danach wird der Sand aus dem Ringspaltraum über das noch unverbundene Ende 10 abgegeben. Schließlich wird am Ende 10 die feste Verbindung zwischen dem Innenrohr 6 und dem Außenrohr 4 hergestellt.

Die Radiallagerung 26 kann man wahlweise vor dem Biegevorgang herstellen oder danach. Für die erstgenannte Möglichkeit befestigt man beispielsweise die drei Drahtgestrickelemente 28 durch Widerstandsschweißung an dem Innenrohr 6, ehe dieses in das Außenrohr 4 eingesteckt wird. Durch die freien Umfangsbereiche zwischen den Drahtgestrickelementen 28 kann der einzufüllende Sand die Radiallagerungsstelle passieren. Analoges gilt für die alternative Radiallagerung 26 mittels Einprägungen 32, wenn man diese vor dem Biegen der Doppelrohranordnung herstellt. Die Erstellung der Radiallagerung 26 mit Einprägungen 32 eignet sich aber auch ganz besonders für die zweitgenannte Möglichkeit, d.h. Erstellung nach dem Biegen. Man kann die zweitgenannte Möglichkeit aber auch mit einem Drahtgestrickring oder mit Drahtgestrickelementen 28 durchführen, z.B. durch axiales Einschieben in den Ringraum nach dem Biegen und dem Entfernen des Sandes. Axiale Festlegung des Drahtgestricks kann z. B. durch umlaufende Einprägungen beidseits neben dem Drahtgestrick, durch Widerstands-Veschweißung mit dem Außenrohr 4 oder dergleichen erfolgen.

Dir Radiallagerung 26 wird in der Regel mit einer so hohen Anpreßkraft auf das Innenrohr 6 vorgenommen, daß dieses sich noch in Axialrichtung dort relativ zu dem Außenrohr 4 verschieben kann. Zu hohe Anpreßkraft ist nachteilig, weil dann das Innenrohr 6 bei Temperaturerhöhung zu leicht in den Bereich plastischer Verformung im Bereich der Radiallagerung 26 kommt.

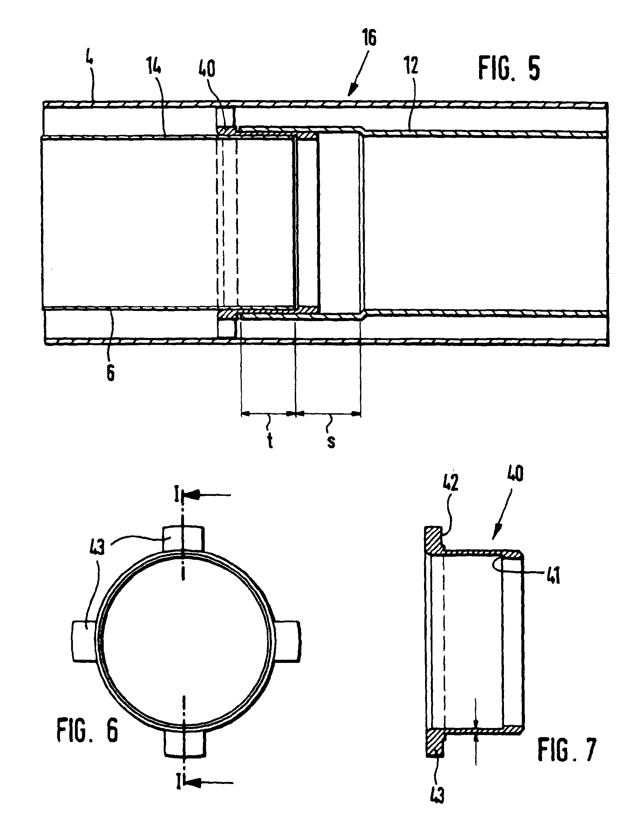

In den Fig. 5 bis 7 ist eine besondere Ausgestaltung eines Schiebesitzes 16 zwischen den Innenrohrabschnitten 12, 14 dargestellt, die konzentrisch im Außenrohr 4 des Abgasrohres 2 eingebettet und auch zentriert sind.

Im besonderen findet bei der Montage des Zusammensteckens der gemeinsam kalibibrierten Innenrohrabschnitte 12, 14 eine Distanzhülse 40 Verwendung, welche kreisrund ausgebildet ist und aus einem verbrennbaren Material, vorzugsweise Kunststoffmaterial, besteht und welche nach einer Endmontage bei Erstinbetriebnahme des Abgasrohres durch die Abgaswärme verbrennt und so den funktionell und maßlich optimierten Schiebesitz 16 freigibt. Die Distanzhülse 40 wird also nur in der Fertigungsphase benötigt.

Die Distanzhülse weist an ihren Axialenden Umfangsabsätze auf.

Der eine gemäß Zeichnung rechte Umfangsabsatz der Distanzhülse ist ein radial nach innen weisender Umfangsvorsprung und bildet einen ersten Axialendanschlag 41 für das Rohrende des zweiten Innenrohrabschnitts 14. Der andere gemäß Zeichnung linke Umfangsabsatz der Distanzhülse 40 ist ein radial nach außen weisender Umfangsvorsprung und bildet einen zweiten Axialendanschlag 42 für das Rohrende des ersten Innenrohrabschnitts 12. Der Axialabstand der beiden Axialendanschläge 41, 42 bestimmt die Einstecktiefe t des zweiten Innenrohrabschnitts 14 im ersten Innenrohrabschnitt 12 und mithin auch den Schiebeweg s bei vorgegebener Axiallänge einer Aufkalibrierung des Innenrohrabschnitts 12, wie dies insbesondere der Fig. 5 zu entnehmen ist.

Die Distanzhülse 40 weist femer radial außenseitig zum zweiten Axialendanschlag 42 umfangsmäßig gleich verteilte vier Zentriernocken 43 auf, wobei die Distanzhülse insgesamt einstückig ausgebildet ist, d.h. Zentriernocken 43 und Axialendanschläge 41, 42 integrierte Bestandteile der Hülse sind. Insbesondere finden (entgegen dem gezeigten Ausführungsbeispiel) drei Zentriernocken 43 Verwendung, die statisch bestimmt eine exakte Berührung mit dem Innenumfang des Außenrohrs 4 ermöglichen.

Durch eine bestimmte Formgebung sowie Einsatz einer Distanzhülse 40 ist somit sichergestellt, daß es im pulsierenden Gasstrom bzw. Fahrbetrieb nicht zu Klappergeräuschen und zu funktionsbeeinträchtigenden Störungen kommen kann, da der Fügespalt temperaturund dehnungsabhängig eingestellt werden kann.

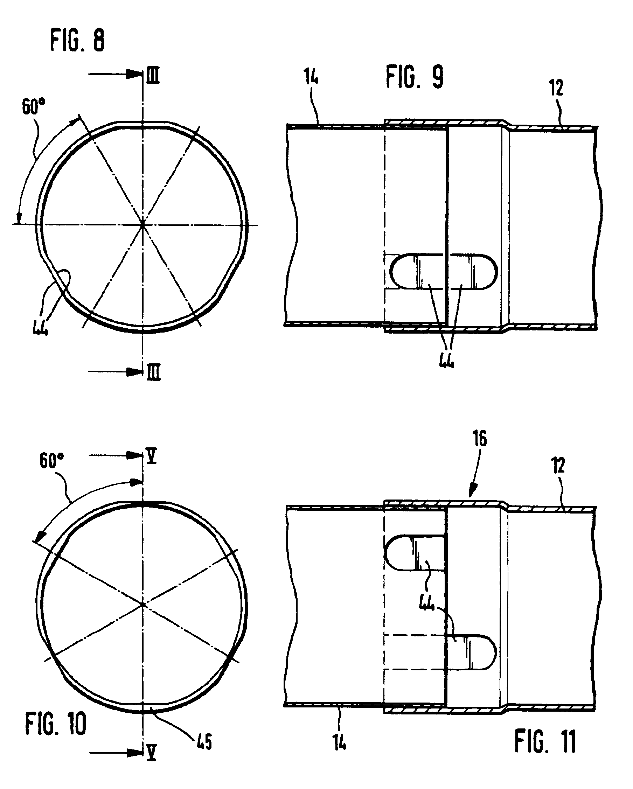

In den Fig. 8 bis 11 ist eine weitere Schiebesitzvariante dargestellt, die ebenfalls mit Hilfe einfacher Mittel verhindert, daß es weder zu Klappergeräuschen noch zu einem Blockieren wie vorstehend beschrieben kommen kann.

Es findet insbesondere eine bestimmte konstruktive Formgebung Verwendung, welche durch Polygonkalibrierung auf dem Umfang der Endbereiche der beiden Innenrohrabschnitte 12, 14 entsteht.

Beim Kalibrieren der Innenrohrabschnitte 12,14, im Ausführungsbeispiel der Fig. 8 bis 11 mit Hilfe eines sechsfachen Spreizsegmentes, wird an jedes zweite Segment im Außenradius eine Fläche von mindestens 0,3 mm angeschliffen. Es entsteht eine Kreisform mit drei um je 120 ° versetzten Abflachungen 44 an den Rohrenden.

Im Fügezustand gemäß den Fig. 8 und 9 liegen die Abflachungen 44 der beiden Rohrenden deckungsgleich übereinander und geben den Fügespalt frei.

Dann werden die Innenrohrabschnitte 12, 14 zum Einbauzustand gemäß den Fig. 10 und 11 um den halben Teilungswinkel des Polygons, hier 60°, zueinander verdreht, und es entstehen drei Linienberührungen, welche zuverlässig ein Klappern verhindern und gleichermaßen axiale Verschieblichkeit der Einzelteile gewährleisten. Der im Fahrbetrieb erwärmte Innenrohrabschnitt 14 kann sich in die freien Umfangsräume 45 radial ausweiten, ohne ein Blockieren des Schiebesitzes zu verursachen.

## Patentansprüche

1. Abgasrohr, das als luftspaltisoliertes doppelwandiges Rohr mit einem Außenrohr (4) und einem Innenrohr (6) ausgebildet ist und das einen ersten Schenkel (18), einen zweiten Schenkel (22) und einen die beiden Schenkel verbindenden Bogen (20) aufweist, wobei zwei über einen Schiebesitz (16) verbundene Innenrohrabschnitte (12, 14) vorgesehen sind und mindestens an einer Stelle zwischen den Enden des Abgasrohrs (2) eine Radiallagerung (26) des Innenrohrs (6) in dem Außenrohr (4) vorgesehen ist,
**dadurch gekennzeichnet,**
**daß** der Schiebesitz (16) an einer ersten Stelle vorgesehen ist, die sich in dem ersten Schenkel (18) befindet, und daß eine Radiallagerung (26) des Innenrohrs (6) an einer zweiten Stelle vorgesehen ist, die in dem Bogen (20) oder in dem zweiten Schenkel (22) so nahe an dem Bogen (20) positioniert ist, daß bei Wärmedehnungsunterschieden zwischen dem Innenrohr (6) und dem Außenrohr (4) ein Arbeiten des Schiebesitzes (16) erzwungen wird.

2. Abgasrohr nach Anspruch 1,
**dadurch gekennzeichnet,**
**daß** sich die zweite Stelle in der dem zweiten Schenkel (22) benachbarten Hälfte des Bogens (20) befindet.

3. Abgasrohr nach Anspruch 1 oder 2,
**dadurch gekennzeichnet,**
**daß** mindestens ein weiterer Bogen (24) im Verlauf des ersten Schenkels (18) und/oder des zweiten Schenkels (22) vorgesehen ist.

4. Abgasrohr nach einem der Ansprüche 1 bis 3,
**dadurch gekennzeichnet,**
**daß** an einem seiner Enden ein Schiebesitz des Innenrohrs (6) relativ zu dem Außenrohr (4) vorgesehen ist.

5. Abgasrohr nach einem der Ansprüche 1 bis 4,
**dadurch gekennzeichnet,**
**daß** die Radiallagerung (26) mittels Drahtgestrick vorgesehen ist.

6. Abgasrohr nach Anspruch 5,
**dadurch gekennzeichnet,**
**daß** mehrere umfangsmäßig beabstandete Drahtgestrickelemente (28) vorgesehen sind.

7. Abgasrohr nach Anspruch 5 oder 6,
**dadurch gekennzeichnet,**
**daß** das Drahtgestrick (28) an dem Innenrohr (6) oder dem Außenrohr (4) befestigt ist.

8. Abgasrohr nach einem der Ansprüche 5 bis 7,
**dadurch gekennzeichnet,**
**daß** das Drahtgestrick (28) in Axialrichtung in dem Außenrohr (4) festgelegt ist.

9. Abgasrohr nach einem der Ansprüche 1 bis 4,
**dadurch gekennzeichnet,**
**daß** die Radiallagerung (26) mittels mehrerer, nach innen gehender, umfangsmäßig beabstandeter Einprägungen (32) des Außenrohres (4) vorgesehen ist.

10. Abgasohr nach Ansprüch 9
**dadurch gekennzeichnet,**
**daß** die Einprägungen (32) so weit beabstandet sind, daß am Innenrohr (6) Umfangsabschnitte (34) ausreichender Länge frei für elastische Auswölbung sind.

11. Abgasrohr nach einem der Ansprüche 1 bis 10,
**dadurch gekennzeichnet,**
**daß** die zwei Innenrohrabschnitte (12, 14) aus unterschiedlichen Materialien bestehen und/oder unterschiedliche Wandstärken haben.

12. Abgasrohr nach einem der Ansprüche 1 bis 11,
**dadurch gekennzeichnet,**
**daß** eine Distanzhülse (40) aus verbrennbarem Material vorgesehen ist, die in dem Fügespalt zwischen erstem Innenrohrabschnitt (12) und zweitem Innenrohrabschnitt (14) aufgenommen ist, wobei die Distanzhülse (40) an ihrem einen Ende einen radial inneren ersten Axialendanschlag (41) für einen axialen Eingriff mit dem Rohrende des zweiten Innenrohrabschnitts (14) und an ihrem anderen Ende einen radial äußeren zweiten Axialendanschlag (42) für einen axialen Eingriff mit dem Rohrende des ersten Innenrohrabschnitts (12) besitzt.

13. Abgasrohr nach Anspruch 12,
**dadurch gekennzeichnet,**
**daß** die Distanzhülse (40) im Bereich des zweiten Axialendanschlags (42) radial äußere Zentriemokken (43) für eine Zentrierung des Innenrohrs (6) im Außenrohr (4) aufweist.

14. Abgasrohr nach Anspruch 13,
**dadurch gekennzeichnet,**
**daß** zumindest drei umfangsmäßig gleich verteilte Zentriernocken (43) vorgesehen sind.

15. Abgasrohr nach einem der Ansprüche 12 bis 14,
**dadurch gekennzeichnet,**
**daß** die Distanzhülse (40) aus Kunststoff, insbesondere aus weichem Polyethylen oder Polystyrol, aus Pappe oder aus Holz besteht.

16. Verfahren zur Herstellung eines luftspaltisolierten doppelwandigen Abgasrohrs,
**dadurch gekennzeichnet**,
(a) daß ein Innenrohr (6), das an einer ersten Stelle zwei über einen Schiebesitz (16) verbundene Innenrohrabschnitte (12, 14) aufweist, in ein Außenrohr (4) gesteckt wird unter gleichzeitiger Erzeugung mindestens einer Radiallagerung (26) des Innenrohres (6) in dem Außenrohr (4) an einer zweiten Stelle zwischen den Enden des Abgasrohrs (2),
(b) daß der Raum zwischen dem Außenrohr (4) und dem Innenrohr (6) mit einem im wesentlichen inkompressiblen Medium gefüllt wird,
(c) daß durch Biegen der Doppelrohranordnung (4, 6) ein Bogen (20) erzeugt wird, der einen ersten Schenkel (18) und einen zweiten Schenkel (22) des Abgasrohrs (2) verbindet,
(d) wobei das Biegen in einem derartigen Bereich erfolgt, daß sich der Schiebesitz (16) in dem ersten Schenkel (18) an der ersten Stelle befindet und daß sich die Radiallagerung (26) des Innenrohrs (6) an der zweiten Stelle in dem Bogen (20) oder in dem zweiten Schenkel (22) so nahe an dem Bogen (20) befindet, daß bei Wärmedehnungsunterschieden zwischen dem Innenrohr (6) und dem Außenrohr (4) ein Arbeiten des Schiebesitzes (16) erzwungen wird;
(e) und daß das Medium aus dem Raum zwischen dem Außenrohr (4) und dem Innenrohr (6) entfernt wird.

17. Verfahren zur Herstellung eines luftspaltisolierten doppelwandigen Abgasrohrs,
**dadurch gekennzeichnet**,
(a) daß ein Innenrohr (6), das an einer ersten Stelle zwei über einen Schiebesitz (16) verbundene Innenrohrabschnitte (12, 14) aufweist, in ein Außenrohr (4) gesteckt wird;
(b) daß der Raum zwischen dem Außenrohr (4) und dem Innenrohr (6) mit einem im wesentlichen inkompressiblen Medium gefüllt wird;
(c) daß durch Biegen der Doppelrohranordnung (4, 6) ein Bogen (20) erzeugt wird, der einen ersten Schenkel (18) und einen zweiten Schenkel (22) des Abgasrohres (2) verbindet,
(d) wobei das Biegen in einem derartigen Bereich erfolgt, daß sich der Schiebesitz (16) in dem ersten Schenkel (18) an der ersten Stelle befindet;
(e) daß das Medium aus dem Raum zwischen dem Außenrohr (4) und dem Innenrohr (6) entfernt wird;
(f) und daß mindestens an einer zweiten Stelle, die sich in dem Bogen (20) oder in dem zweiten Schenkel (22) so nahe an dem Bogen (20) befindet, daß bei Wärmedehnungsunterschieden zwischen dem Innenrohr (6) und dem Außenrohr (4) ein Arbeiten des Schiebesitzes (16) erzwungen wird, eine Radiallagerung (26) des Innenrohrs (6) in dem Außenrohr (4) erzeugt wird.

18. Verfahren nach Anspruch 16 oder 17,
**dadurch gekennzeichnet,**
**daß** bei der Montage des innenrohrs (5) bzw. bei einem Zusammenstecken der zueinander axial ausgerichteten, angepaßten, einen Fügespatt aufweisenden Innenrohrabschnitte (12, 14) eine zwischengeordnete Distanzhülse (40) verwendet wird, welche bei Erstinbetriebnahme des Abgasrohres (2) durch die Abgaswärme verbrennt und dadurch den Schiebesitz (16) freigegibt.

19. Verfahren nach Anspruch 18,
**dadurch gekennzeichnet,**
**daß** durch die Distanzhülse (40) die Einstecktiefe (t) und/oder der Schiebeweg (s) des zweiten Innenrohrabschnitts (14) im ersten innenrohrabschnitt (12) festgelegt wird.

20. Verfahren nach Anspruch 18 oder 19,
**dadurch gekennzeichnet,**
**daß** durch die Distanzhülse (40) das Spaltmaß des Fügespaltes bezüglich Durchmesser und Abwicklungstoleranz der Innenrohrabschnitte (12, 14) durch gemeinsames Kalibrieren festgelegt wird.

21. Verfahren nach einem der Ansprüche 18 bis 20,
**dadurch gekennzeichnet,**
**daß** durch die Distanzhülse (40) das Innenrohr (6) zum Außenrohr (4) zentriert wird.

22. Verfahren nach einem der Ansprüche 18 bis 21,
**dadurch gekennzeichnet,**
**daß** die Distanzhülsa (40) in den aufkalibrierten, den Fügespalt ausbildenden Endbereich des ersten Innenrohrabschnitts (12) bis zu einem definierten ersten Axialendanschlag (41) eingesteckt und anschließend der Endbereich des zweiten Innenrohrabschnitts (14) bis zu einem definierten zweiten Axialendanschlag (42) eingesteckt wird.

23. Verfahren nach Anspruch 22,
**dadurch gekennzeichnet,**
**daß** die zusammengesteckten Innenrohrabschnitte (12, 14) einschließlich Distanzhülse (40) in das Außenrohr (4) gesteckt werden, wobei durch radial äußere auf dem Umfang verteilte Zentriemocken (43) der Distanzhülse (40) das Innenrohr (6) im Außenrohr (4) zentriert wird.

24. Verfahren nach Anspruch 16 oder17
**dadurch gekennzeichnet,**
**daß** der Schiebesitz durch Polygonkalibrierung auf dem Umfang der Innenrohrabschnitte (12, 14) im Endbereich der Steck- und Schiebeverbindung ausgebildet wird, wobei die einzeln polygonkalibrierten Innenrohrabschnitte (12, 14) nach einem Zusammenstecken umfangsmäßig zueinander verdreht werden, bis Axiallinienberührung zwischen den Endbereichen der Innenrohrabschnitte (12,14) entsteht.

25. Verfahren nach Anspruch 24,
**dadurch gekennzeichnet,**
**daß** die einzeln polygonkalibrierten Innenrohrabschnitte (12, 14) nach einem Zusammenstecken. um den halben Teilungswinkel der Polygonkalibrierung zueinander verdreht werden.

26. Verfahren nach Anspruch 24 oder 25,
**dadurch gekennzeichnet,**
**daß** die Polygonkalibrierung durch auf dem Rohrumfang gleich verteilte Abflachungen (44), insbesondere drei Abflachungen (44) pro Rohrabschnitt (12 bzw. 14), ausgebildet wird.

27. Verfahren nach einem der Ansprüche 24 bis 26,
**dadurch gekennzeichnet,**
**daß** die Polygonkalibrierung durch feste oder verstellbare Kalibrierdome erfolgt.

28. Verfahren nach einem der Ansprüche 24 bis 26,
**dadurch gekennzeichnet,**
**daß** die Polygonkalibrierung durch Spreizsegmente erfolgt.

29. Verfahren nach Anspruch 28,
**dadurch gekennzeichnet,**
**daß** die Polygonkalibrierung durch sechs Spreizsegmente erfolgt, wobei an jedes zweite Spreizsegment im Anßenradius eine Fläche von mindestens 0,3 mm angeschliffen ist.

## Claims

1. Exhaust gas pipe which is designed as an air gap-insulated double-walled pipe with an outer pipe (4) and an inner pipe (6) and has a first arm (18), a second arm (22) and a bend (20) connecting the two arms, wherein two inner pipe portions (12, 14) connected by a sliding fit (16) are provided and, at least at one position between the ends of the exhaust gas pipe (2), a radial bearing (26) for the inner pipe (6) is provided in the outer pipe (4), **characterised in that** the sliding fit (16) is provided at a first position located in the first arm (18) and **in that** a radial bearing (26) of the inner pipe (6) is provided at a second position located in the bend (20) or in the second arm (22) at such a distance from the bend (20) that differences in thermal expansion between the inner pipe (6) and the outer pipe (4) force relative movement in the sliding fit (16).

2. Exhaust gas pipe according to claim 1, **characterised in that** the second position is located in the half of the bend (20) adjacent to the second arm (22).

3. Exhaust gas pipe according to claim 1 or 2, **characterised in that** at least one further bend (24) is provided in the course of the first arm (18) and/or of the second arm (22).

4. Exhaust gas pipe according to one of claims 1 to 3, **characterised in that** a sliding fit for the inner pipe (6) relative to the outer pipe (4) is provided at one of its ends.

5. Exhaust gas pipe according to one of claims 1 to 4, **characterised in that** the radial bearing (26) is provided by means of knitted wire fabric.

6. Exhaust gas pipe according to claim 5, **characterised in that** several peripherally spaced knitted wire fabric elements (28) are provided.

7. Exhaust gas pipe according to claim 5 or 6, **characterised in that** the knitted wire fabric (28) is fastened on the inner pipe (6) or the outer pipe (4).

8. Exhaust gas pipe according to one of claims 5 to 7, **characterised in that** the knitted wire fabric (28) is axially fixed in the outer pipe (4).

9. Exhaust gas pipe according to one of claims 1 to 4, **characterised in that** the radial bearing (26) is provided by means of several inwardly extending peripherally spaced impressions (32) in the outer pipe (4).

10. Exhaust gas pipe according to claim 9, **characterised in that** the impressions (32) are spaced so far apart that peripheral portions (34) of adequate length are free for elastic enlargement on the inner pipe (6).

11. Exhaust gas pipe according to one of claims 1 to 10, **characterised in that** the two inner pipe portions (12, 14) consist of different materials and/or have different wall thicknesses.

12. Exhaust gas pipe according to one of claims 1 to 11, **characterised in that** a spacer tube (40) made of combustible material is provided which is held in the gap between first inner pipe portion (12) and second inner pipe portion (14), the spacer tube (40) having, at one end, a radially internal first axial end stop (41) for axial engagement with the pipe end of the second inner pipe portion (14) and, at its other end, a radially external second axial end stop (42) for axial engagement with the pipe end of the first inner pipe portion (12).

13. Exhaust gas pipe according to claim 12, **characterised in that** the spacer tube (40) has, in the region of the second axial end stop (42), radially external centring cams (43) for centring of the inner pipe (6) in the outer pipe (4).

14. Exhaust gas pipe according to claim 13, **characterised in that** at least three peripherally uniformly distributed centring cams (43) are provided.

15. Exhaust gas pipe according to one of claims 12 to 14,
**characterised in that** the spacer tube (40) consists of plastics material, in particular of flexible polyethylene or polystyrene, of cardboard or of wood.

16. Process for producing an air gap-insulated double-walled exhaust gas pipe, **characterised in that**
(a) an inner pipe (6) which, at a first position, has two inner pipe portions (12, 14) connected by a sliding fit (16), is inserted into an outer pipe (4) while simultaneously producing at least one radial bearing (26) of the inner pipe (6) in the outer pipe (4) at a second position between the ends of the exhaust gas pipe (2),
(b) the space between the outer pipe (4) and the inner pipe (6) is filled with a substantially incompressible medium,
(c) a bend (20) is produced by bending the double pipe arrangement (4, 6), which bend (20) connects a first arm (18) and a second arm (22) of the exhaust gas pipe (2),
(d) bending is effected at such location that the sliding fit (16) is provided in the first arm (18) at the first position and that the radial bearing (26) of the inner pipe (6) is provided at the second position located in the bend (20) or in the second arm (22) at such a distance from the bend (20) that differences in thermal expansion between the inner pipe (6) and the outer pipe (4) force relative movement in the sliding fit (16), and
(e) the medium is removed from the space between the outer pipe (4) and the inner pipe (6).

17. Process for producing an air gap-insulated double-walled exhaust gas pipe, **characterised in that**
(a) an inner pipe (6) which, at a first position, has two inner pipe portions (12, 14) connected by a sliding fit (16), is inserted into an outer pipe (4),
(b) the space between the outer pipe (4) and the inner pipe (6) is filled with a substantially incompressible medium,
(c) a bend (20) is produced by bending the double pipe arrangement (4, 6), which bend (20) connects a first arm (18) and a second arm (22) of the exhaust gas pipe (2),
(d) bending is effected at such a location that the sliding fit (16) is provided in the first arm (18) at the first position,
(e) the medium is removed from the space between the outer pipe (4) and the inner pipe (6), and
(f) a radial bearing (26) of the inner pipe (6) in the outer pipe (4) is produced at a second position located in the bend (20) or in the second arm (22) at such a distance from the bend (20) that differences in thermal expansion between the inner pipe (6) and the outer pipe (4) force relative movement within the sliding fit (16).

18. Process according to claim 16 or 17, **characterised in that**, during installation of the inner pipe (6) or during assembly of the mutally axially aligned adapted inner pipe portions (12, 14) comprising a gap, an interposed spacer tube (40) is used which burns on initial operation of the exhaust gas pipe (2) owing to the exhaust gas heat and therefore releases the sliding fit (16).

19. Process according to claim 18, **characterised in that** the depth of insertion (t) and/or the sliding path (s) of the second inner pipe portion (14) in the first inner pipe portion (12) is determined by the spacer tube (40).

20. Process according to claim 18 or 19, **characterised in that** the size of the gap is determined with respect to diameter and development tolerance of the inner pipe portions (12, 14) by common calibration using the spacer tube (40).

21. Process according to one of claims 18 to 20,
**characterised in that** the inner pipe (6) is centred relative to the outer pipe (4) by the spacer tube (40).

22. Process according to one of claims 18 to 21,
**characterised in that** the spacer tube (40) is inserted into the calibrated end region, forming the gap, of the first inner pipe portion (12) up to a defined first axial end stop (41) and the end region of the second inner pipe portion (14) is then inserted up to a defined second axial end stop (42).

23. Process according to claim 22, **characterised in that** the assembled inner pipe portions (12, 14) including spacer tube (40) are inserted into the outer pipe (4), the inner pipe (6) being centred in the outer pipe (4) by radially external, peripherally distributed centring cams (43) of the spacer tube (40).

24. Process according to claim 16 or 17, **characterised in that** the sliding fit is designed by polygonal calibration over the periphery of the inner pipe portions (12, 14) in the end region of the plug-in and sliding connection, the individually polygonally calibrated inner pipe portions (12, 14) being mutally peripherally rotated after assembly until there is axial linear contact between the end regions of the inner pipe portions (12, 14).

25. Process according to claim 24, **characterised in that** the individually polygonally calibrated inner pipe portions (12, 14) are mutually rotated by half the angular pitch of the polygonal calibration after assembly.

26. Process according to claim 24 or 25, **characterised in that** the polygonal calibration is formed by flattened regions (44) uniformly distributed over the periphery of the pipe, in particular three flattened regions (44) per pipe portion (12 or 14).

27. Process according to one of claims 24 to 26, **characterised in that** polygonal calibration is effected by fixed or adjustable calibration mandrels.

28. Process according to one of claims 24 to 26, **characterised in that** polygonal calibration is effected by expanding segments.

29. Process according to claim 28, **characterised in that** polygonal calibration is effected by six expanding segments, an area of at least 0.3 mm being ground in the external radius on every second expanding segment.

## Revendications

1. Tuyau d'échappement, formé comme un tuyau à double paroi isolé par un espace d'air d'un tuyau extérieur (4) et d'un tuyau intérieur (5), et qui présente un premier coude (18), un second coude (22) et un arc (20) reliant les deux coudes, deux sections de tube intérieur (12, 14) reliées à l'aide d'un ajustement appuyé (16) étant prévues et un logement radial (26) du tuyau intérieur (6) dans le tuyau extérieur (4) étant prévu au moins à un endroit entre les extrémités du tuyau d'échappement (2), **caractérisé en ce que** l'ajustement appuyé (16) est prévu à un premier endroit situé dans le premier coude (18), et qu'un logement radial (26) du tuyau intérieur (6) est prévu à un second endroit situé dans l'arc (20) ou dans le second coude (22) à une telle distance de l'arc (20) que la différence de dilatation thermique entre le tuyau intérieur (6) et le tuyau extérieur (4) force un mouvement relatif dans l'ajustement appuyé (16).

2. Tuyau d'échappement selon la revendication 1, **caractérisé en ce que** le second endroit se trouve dans la moitié de l'arc (20) adjacente au second coude (22).

3. Tuyau d'échappement selon la revendication 1 ou 2, **caractérisé en ce qu**'au moins un arc supplémentaire (24) est prévu sur le parcours du premier coude (18) et/ou du second coude (22).

4. Tuyau d'échappement selon l'une des revendications 1 à 3,
**caractérisé en ce qu**'un ajustement appuyé du tuyau intérieur (6) est prévu relativement au tuyau extérieur (4) à l'une de ses extrémités.

5. Tuyau d'échappement selon l'une des revendications 1 à 4,
**caractérisé en ce que** le logement radial (26) est prévu au moyen d'un tissu métallique.

6. Tuyau d'échappement selon la revendication 5, **caractérisé en ce que** plusieurs éléments en tissu métallique (28) sont prévus répartis sur la circonférence.

7. Tuyau d'échappement selon la revendication 5 ou 6, **caractérisé en ce que** le tissu métallique (28) est fixé sur le tuyau intérieur (6) ou sur le tuyau extérieur (4).

8. Tuyau d'échappement selon l'une des revendications 5 à 7, **caractérisé en ce que** le tissu métallique (28) est fixé dans le tuyau extérieur (4) dans la direction axiale.

9. Tuyau d'échappement selon l'une des revendications 1 à 4, **caractérisé en ce que** le logement radial (26) est prévu au moyen de plusieurs empreintes (32) du tuyau extérieur (4), rentrant vers l'intérieur, réparties sur la circonférence.

10. Tuyau d'échappement selon la revendication 9, **caractérisé en ce que** les empreintes (32) ont un écart tel que des sections périphériques (34) de longueur suffisante sont libres sur le tuyau intérieur (6) pour un bombement élastique.

11. Tuyau d'échappement selon l'une des revendications 1 à 10, **caractérisé en ce que** les deux sections de tuyau intérieur (12, 14) sont constitués de matériaux différents et/ou ont diverses épaisseurs de parois.

12. Tuyau d'échappement selon l'une des revendications 1 à 11,
**caractérisé en ce qu**'une douille d'écartement (40) est prévue en matériau inflammable, logée dans un espace d'assemblage entre la première section de tuyau intérieur (12) et la seconde section de tuyau intérieur (14), la douille d'écartement (40) possédant à l'une de ses extrémités une première butée radiale intérieure de fin de course (41) pour un contact axial avec l'extrémité du tuyau de la seconde section de tuyau intérieur (14), et à l'autre extrémité une seconde butée radiale extérieure de fin de course (42) pour un contact radial avec l'extrémité du tuyau de la première section de tuyau intérieur (12).

13. Tuyau d'échappement selon la revendication 12, **caractérisé en ce que** la douille d'écartement (40) présente, sur la zone de la seconde butée de fin de course (42), des ergots de centrage radiaux extérieurs (43) pour un centrage du tuyau intérieur (6) dans le tuyau extérieur (4).

14. Tuyau d'échappement selon la revendication 13, **caractérisé en ce qu**'au moins trois ergots de centrage (43) sont prévus sur la circonférence à équidistance.

15. Tuyau d'échappement selon l'une des revendications 12 à 14, **caractérisé en ce que** la douille d'écartement (40) est en matière plastique, en particulier en polyéthylène ou en polystyrène, en carton ou en bois.

16. Procédé de fabrication d'un tuyau d'echappement à double paroi isolé par un espace d'air, **caractérisé en ce que**
(a) un tuyau intérieur (6), qui présente à un premier endroit deux sections de tuyau intérieur (12, 14) reliées à l'aide d'un ajustement appuyé (16), est emboîté dans un tuyau extérieur (4) en même temps qu'un logement radial (26) du tuyau intérieur (6) dans le tuyau extérieur(4) est créé à un second endroit entre les deux extrémités du tuyau d'échappement (2),
(b) l'espace entre le tuyau extérieur (4) et le tuyau intérieur (6) est rempli d'un produit essentiellement incompressible,
(c) un arc (20) reliant un premier coude (18) à un second coude (22) du tuyau d'échappement est créé par le cintrage de la structure du double tuyau (4, 6),
(d) le cintrage est effectué à un tel lieu que l'ajustement appuyé (16) est prévue dans le premier coude (18) au premier endroit et que le logement radial (26) du tuyau intérieur (6) est prévu au second endroit à une telle distance de l'arc (20) que la différence de dilatation thermique entre le tuyau intérieur (6) et le tuyau extérieur (4) force un mouvement relatif dans l'ajustement appuyé (16), et
(e) le produit est retiré de l'espace entre le tuyau extérieur (4) et le tuyau intérieur (6).

17. Procédé de fabrication d'un tuyau d'échappement à double paroi isolé par un espace d'air, **caractérisé en ce que**
(a) un tuyau intérieur (6) qui présente à un premier endroit deux sections de tuyau intérieur (12, 14) reliées à l'aide d'un ajustement appuyé (16), est emboîté dans un tuyau extérieur (4),
(b) l'espace entre le tuyau extérieur (4) et le tuyau intérieur (6) est rempli d'un produit essentiellement incompressible,
(c) un arc (20) reliant un premier coude (18) à un second coude (22) du tuyau d'échappement est créé par le cintrage de la structure du double tuyau (4, 6),
(d) le cintrage est effectué à un tel lieu que l'ajustement appuyé (16) est prévu dans le premier coude (18) au premier endroit,
(e) le produit est retiré de l'espace entre le tuyau extérieur (4) et le tuyau intérieur (6), et
(f) un logement radial (26) du tuyau intérieur (6) dans le tuyau extérieur (4) est créé à un second endroit situé dans l'arc (20) ou dans le seconde coude (22) à une telle distance de l'arc (20) que la différence de dilatation thermique entre le tuyau intérieur (6) et le tuyau extérieur (4) force un mouvement relatif dans l'ajustement appuyé (16).

18. Procédé selon la revendication 16 ou 17, **caractérisé en ce qu**'une douille d'écartement (40) interposée est utilisée lors du montage du tuyau intérieur (6) ou lors de l'emboîtement des sections de tuyau intérieur (12, 14) dirigées axialement l'une par rapport à l'autre, ajustées et présentant un espace d'assemblage, douille qui, lors de la première mise en service du tuyau d'échappement (2), brûle par la chaleur des gaz brûlés et libère ainsi l'ajustement appuyé (16).

19. Procédé selon la revendication 18 **caractérisé en ce que** la profondeur d'emboîtement (t) et/ou la trajectoire coulissante de la seconde section de tuyau intérieur (14) dans la première section de tuyau intérieur (12) est déterminée par la douille d'écartement (40).

20. Procédé selon la revendication 18 ou 19, **caractérisé en ce que** la douille d'écartement (40) détermine la dimension de l'espace d'assemblage relative au diamètre et à la tolérance du développement des sections de tuyau intérieur (12, 14) par un calibrage commun.

21. Procédé selon l'une des revendications 18 à 20, **caractérisé en ce que** le tuyau intérieur (6) est centré par rapport au tuyau extérieur (4) au moyen de la douille d'écartement (40).

22. Procédé selon l'une des revendications 18 à 21, **caractérisé en ce que** la douille d'écartement (40) est emboîtée dans l'extrémité de la première section de tuyau intérieur calibrée (12) formant l'espace d'assemblage jusqu'à une première butée de fin de course définie (41) et que l'extrémité de la seconde section de tuyau intérieur (14) est emboîtée ensuite jusqu'à une seconde butée de fin de course (42) définie.

23. Procédé selon la revendication 22, **caractérisé en ce que** les sections de tuyau intérieur emboîtées ensemble (12, 14), y compris la douille d'écartement (40), sont emboîtées dans le tuyau extérieur (4), le tuyau intérieur (6) étant centré dans le tuyau extérieur (4) au moyen d'ergots de centrage (43) radiaux extérieurs répartis sur la circonférence de la douille d'écartement (40).

24. Procédé selon la renvendication 16 ou 17, **caractérisé en ce que** l'ajustement appuyé est formé par calibrage polygonal sur la circonférence des sections de tuyau intérieur (12, 14) à l'extrémité de l'emboîtement et de la liaison coulissante, chaque section de tuyau intérieur (12, 14) calibrée polygonalement étant pivotée l'une par rapport à l'autre en fonction de la circonférence après emboîtement jusqu'à ce qu'il y ait un contact en ligne axiale entre les extrémités des sections de tuyau intérieur (12, 14).

25. Procédé selon la revendication 24, **caractérisé en ce que** chaque section de tuyau intérieur calibrée polygonalement (12, 14) est pivotée l'une par rapport à l'autre, après un emboîtement d'une valeur de la moitié du pas angulaire du calibrage polygonal.

26. Procédé selon la revendication 24 ou 25, **caractérisé en ce que** le calibrage polygonal est formé par des aplatissements (44) répartis de façon régulière sur la périphérie du tuyau, en particulier trois aplatissements (44) par section de tuyau (12 ou 14).

27. Procédé selon l'une des revendications 24 à 26, **caractérisé en ce que** le calibrage polygonal est réalisé par des boulons de calibrage fixes ou réglables.

28. Procédé selon l'une des revendications 24 à 26, **caractérisé en ce que** le calibrage polygonal est réalisée au moyen de segments d'écartement.

29. Procédé selon la revendication 28, **caractérisé en ce que** le calibrage polygonal est réalisé au moyen de six segments d'écartement, une surface d'au moins 0,3 mm étant rectifiée sur un sur deux segments d'écartement dans le rayon extérieur.
